# EUROPÄISCHE PATENTSCHRIFT

(11) **EP 0 808 804 B1**
(45) Veröffentlichungstag und Bekanntmachung des Hinweises auf die Patenterteilung: **28.03.2001**
(21) Anmeldenummer: 97108405.8
(22) Anmeldetag: 23.05.1997
(51) Int. Cl.: C02F 3/20

(54) **Boden-Verteiler zur Beaufschlagung elastischer Schläuche mit Gas**
Distributor for introducing gas into elastic tubes
Distributeur pour l'introduction de gaz dans des tuyaux élastiques

(30) Priorität: 24.05.1996 DE 19621116
(43) Veröffentlichungstag der Anmeldung: 26.11.1997
(73) Patentinhaber: INVENT Umwelt- und Verfahrenstechnik GmbH & Co. KG, 91058 Erlangen (DE)
(72) Erfinder: Höfken, Marcus Dr.-Ing., 91054 Erlangen (DE)
(74) Vertreter: Fehners, Klaus Friedrich, Dipl.-Ing., Dipl.-Wirtsch.-Ing

(56) Entgegenhaltungen:
- EP-A- 0 346 109
- DE-A- 19 616 914
- US-A- 3 880 965
- US-A- 4 238 336
- US-A- 4 488 508

## Beschreibung

Die Erfindung bezieht sich auf einen Boden-Verteiler für die Beaufschlagung elastischer Schläuche mit Gas, umfassend im wesentlichen einen Grund-Hohlkörper frei wählbarer Länge mit mindestens einem Anschlußstutzen für die Einleitung von Gas und mit mindestens einem Auslaßstutzen zum Anschluß eines mit Gas zu beaufschlagenden elastischen Schlauches.

Solche Boden-Verteiler werden in Verbindung bzw. in Kombination mit Begasungsvorrichtungen verwendet, die im Rahmen einer Vielzahl technischer Anwendungen, insbesondere aber zur Aufrechterhaltung der biologischen Abbauprozesse während der biologischen Abwasserreinigung eingesetzt werden. Hierbei ist insbesondere der Eintrag von Sauerstoff in die zu reinigenden Flüssigkeiten von besonderer Bedeutung.

Solche Belüftungsvorrichtungen sind beispielsweise aus den deutschen Gebrauchsmustern G 88 16 189.7 bzw. G 94 19 439.4 bekannt, sie arbeiten im wesentlichen mit zwischen Boden-Verteilern angeordneten und jeweils an diesen angeschlossenen elastischen Schläuchen, die perforiert sind, so daß, sobald die Schläuche mit einem Gas beaufschlagt werden, dieses Gas durch die Perforationen aus den Schläuchen heraus und in die zu reinigende Flüssigkeit hineintreten kann. Wie im weiteren insbesondere in dem deutschen Gebrauchsmuster G 94 05 517.3 beschrieben ist, dienen die Boden-Verteiler auch dazu, die elastischen Schläuche am Boden zu halten, denn sobald diese mit dem Gas beaufschlagt werden, schwimmen sie auf. Um ein solches Aufschwimmen zu verhindern, ist es bekannt, zwischen den an den Enden der Schläuche angeordneten Boden-Verteilern zusätzliche Niederhalter vorzusehen.

Alle bekannten Boden-Verteiler-Konstruktionen bzw. Begasungs-Systeme die mit elastischen Schläuchen arbeiten, haben den gravierenden Nachteil, daß in den elastischen Schläuchen im Anschlußbereich an den Auslaßstutzen an den jeweiligen Boden-Verteilern Risse auftreten und diese dann frühzeitig erneuert werden müssen, da nämlich sonst die zu reinigende Flüssigkeit in das Begasungssystem eintreten würde.

Diese Risse und Beschädigungen an den elastischen Schläuchen gerade im Anschlußbereich an den Auslaßstutzen der Boden-Verteiler ergeben sich dann, wenn ein Begasungssystem, aus welchen Gründen auch immer, abgeschaltet werden muß, dann nämlich werden die elastischen Schläuche durch den Wasserdruck flach zusammengedrückt und werden am freien Ende der Anschlußstutzen stark verbogen bzw. abgeknickt und es kann dann aufgrund von Materialermüdung zu Brüchen kommen. Gleiches ergibt sich auch im umgekehrten Falle, dann nämlich, wenn die elastischen Schläuche mit Gas beaufschlagt werden, sie schwimmen nämlich auf und es stellt sich bei diesen Schläuchen eine entsprechende Überdehnung an der Unterkante der Auslaßstutzen am Boden-Verteiler ein.

Um das Aufschwimmen der elastischen Schläuche zu verhindern und im Betriebszustand die Schläuche möglichst geradlinig verlaufen zu lassen, ist es bekannt, diese mit einer Vielzahl von Niederhaltern vor einem Aufschwimmen zu bewahren. Solche Niederhalte-Konstruktionen sind jedoch verhältnismäßig aufwendig und stehen einem flexiblen Einsatz solcher Belüftungs-Vorrichtungen hinderlich im Wege. Im übrigen verhindern solche Niederhalte-Konstruktionen nicht die hohe Materialbeanspruchung der elastischen Schläuche im Bereich der Auslaßstutzen an den Boden-Verteilern.

Die Erfindung hat sich deshalb zum Ziel gesetzt, die Anschluß-Stutzen der bekannten Boden-Verteiler so zu verbessern, daß die vorbeschriebenen Spannungszustände im Bereich des Anschlusses der elastischen Schläuche an den Anschluß-Stutzen nicht auftreten, zumindest jedoch stark reduziert werden.

Diese Aufgabe wird bei dem eingangs beschriebenen Boden-Verteiler dadurch gelöst, daß der Auslaß-Stutzen in einer vertikalen Ebene verschwenkbar ist.
Durch diese Ausbildung des Auslaß-Stutzens kann dieser sich jeweils entsprechend dem Betriebszustand der Begasungsvorrichtung den Eigenbewegungen des elastischen Schlauches anpassen, d. h. wird der angeschlossene Schlauch mit Gas beaufschlagt, schwimmt dieser auf und wirkt auf den schwenkbaren Auslaß-Stutzen so ein, daß dieser sich mit dem Schlauch bewegt, so daß die Richtung der Längsachse des Auslaßstutzens der Richtung der Längsachse des elastischen Schlauches im Anschlußbereich entspricht. Dadurch wird vermieden, daß der Schlauch am Auslaßstutzen abknickt, also keine übermässigen Spannungseinleitungen an dieser Stelle erfolgen, die den Schlauch beschädigen würden. Gleiches gilt auch für den anderen Fall, daß der Schlauch nicht mit Gas beaufschlagt wird, dann wird dieser von dem Druck der ihn umgebenden Flüssigkeit zusammengepreßt und auf den Boden des Beckens gedrückt. Würde der Auslaßstutzen dieser Bewegung des Schlauches nicht folgen könne, würden ebenfalls Abknickungen des Schlauches am Auslaßstutzen erfolgen und das Schlauchmaterial würde an diesen Stellen ganz besonders strapaziert werden.

In einer anderen vorteilhaften Ausgestaltung der Erfindung ist der Grund-Hohlkörper mit dem daran vorgesehenen Auslaßstutzen um seine zur Vertikalen senkrechte Längsachse schwenkbar ausgebildet ist.
Diese Ausbildung sieht vor, daß nicht nur jeder einzelne am Grund-Hohlkörper vorgesehene Auslaßstutzen verschwenkbar ausgebildet ist, sondern der gesamte Grund-Hohlkörper mit seiner Vielzahl von Auslaßstutzen. In einer solchen Ausbildung liegt der Vorteil, daß die Anzahl der Schwenklagerungen jedes einzelnen Anschlußstutzens verringert werden und dadurch weniger Dichtungsprobleme auftreten.

In weiterer vorteilhafter Ausbildung der Erfindung verjüngt sich der Auslaßstutzen, ausgehend von dem Grund-Hohlkörper in Richtung seiner Mündung in den angeschlossenen elastischen Schlauch.

Diese Verringerung des Durchmessers des Auslaßstutzens in Richtung des angeschlossenen Schlauches gewährleistet, daß dieser sich, wenn er nicht mit Gas beaufschlagt wird, an die Außenwandung des Auslaßstutzens anlegen kann und von dieser gestützt wird und dadurch wiederum erreicht wird, daß das Schlauchmaterial nicht durch ein starkes Abknicken o. ä. überstrapaziert wird.

In weiterer vorteilhafter Ausbildung der Erfindung weist der Anschlußstutzen in der Wandung seines Verjüngungsbereiches Löcher auf.
Diese Löcher gewährleisten, daß bei Beaufschlagung des elastischen Schlauches mit Gas dieser sich im Anschlußbereich des Auslaßstutzens langsam von dem Verjüngungsbereich abhebt und dann seine durch die Gasbeaufschlagung bewirkte straffe Form annimmt. Auch diese Maßnahme wirkt einer Materialermüdung der elastischen Schläuche entgegen.

Vorteilhaft ist der Grund-Hohlkörper als Rohr bestimmter Länge und bestimmten Durchmessers ausgebildet, an welchem mehrere Auslaßstutzen in einem Abstand voneinander angeordnet sind, und daß das Rohr an seinen Enden jeweils Vorrichtungen aufweist, an welche weitere Grund-Hohlkörper mit entsprechenden Vorrichtungen anschließbar sind.
Diese Ausbildung des Boden-Verteilers erlaubt eine modulweise Verwendung desselben, je nach Größe des mit der Begasungs-Vorrichtung zu bestückenden Klärbeckens.

Vorteilhaft sind in den Auslaßstutzen und/oder im Grund-Hohlkörper selbst Rückschlagventile vorgesehen.
Diese Ventile bewirken, daß bei Abschaltung der Begasungs-Anlage und gegebenenfalls fehlerhaften bzw. beschädigten Schläuchen Wassereinbruch in das System verhindert wird.

Ein die Erfindung nicht beschränkendes Ausführungsbeispiel wird nachfolgend anhand der Zeichnungen beschrieben.

Es zeigen:
- Fig. 1:: eine perspektivische Teilansicht auf eine aus fünf nebeneinander angeordneten elastischen Schläuchen bestehende Begasungs-Vorrichtung mit einem Boden-Verteiler und einem Niederhalter,
- Fig. 2:: einen Schnitt durch einen Boden-Verteiler mit Auslaßstutzen und angeschlossenem Schlauch im Betriebszustand der Begasungs-Vorrichtung und
- Fig. 3:: einen Schnitt durch einen Boden-Verteiler mit Auslaßstutzen und angeschlossenem Schlauch im Ruhezustand.

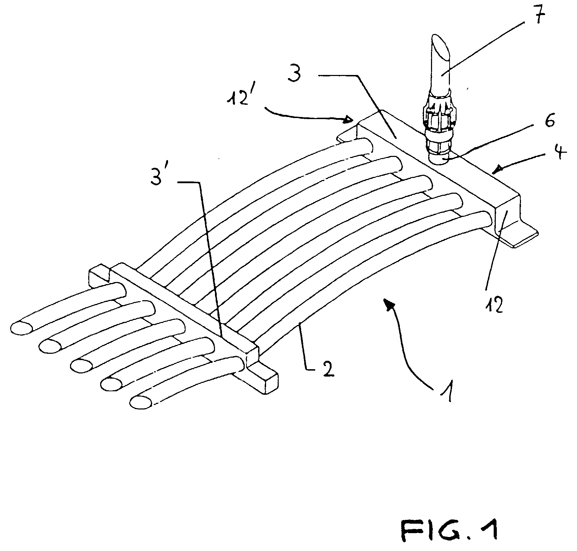

In Fig. 1 ist in perspektivischer Ansicht ein Teil einer Begasungs-Vorrichtung 1 dargestellt, wie sie in Verbindung mit der Abwasserreinigung in Klärbecken eingebaut wird. Diese Begasungs-Vorrichtung 1 besteht im wesentlichen aus mehreren, in diesem Ausführungsbeispiel aus fünf nebeneinander angeordneten und aus einem elastischen Material bestehenden Schläuchen 2, die zwischen auf dem Boden des Klärbeckens befestigten Boden-Verteilern 3 angeordnet sind, wobei in Fig. 1 nur einer der Bodenverteiler 3 abgebildet ist. Zusätzlich können Niederhalter 3' vorgesehen sein, die die Schläuche 2 bei größerem Abstand der Boden-Verteiler 3 nieder halten.

Vorzugsweise ist der Bodenverteiler 3 als Grund-Hohlkörper 4 ausgebildet, an welchem Auslaßstutzen 5 für die daran angeschlossenen elastischen Schläuche 2 vorgesehen sind. An dem Grund-Hohlkörper 4 wiederum ist ein Anschlußstutzen 6 für den Anschluß einer Zuleitung 7 für das in die elastischen Schläuche 2 einzuleitende Gas vorgesehen.

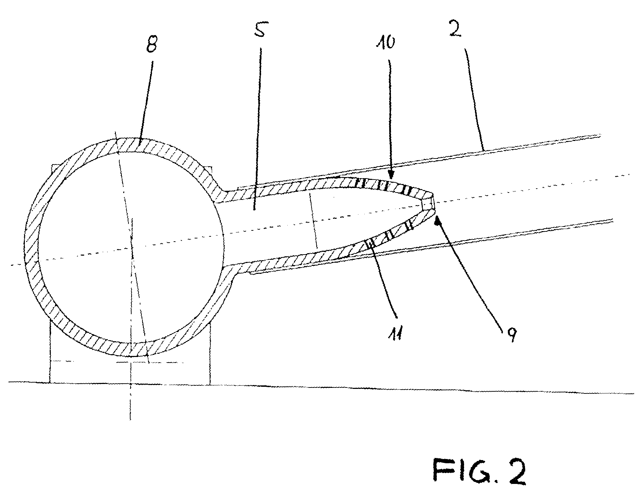

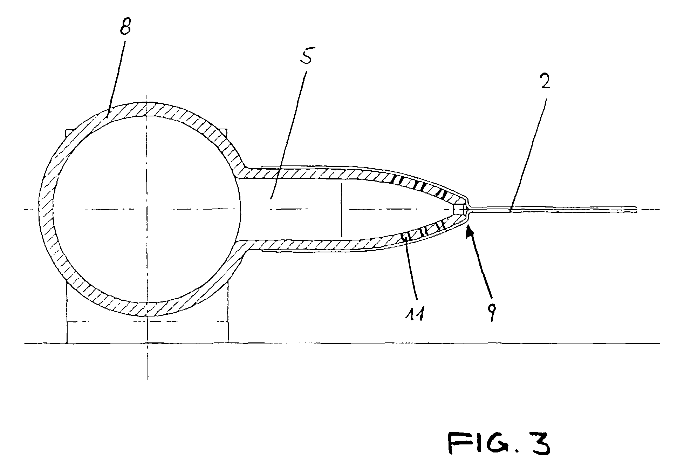

Der Grund-Hohlkörper 4 ist vorteilhaft als Rohr 8 bestimmter Länge und bestimmten Durchmessers ausgebildet, wie den Figuren 2 und 3 zu entnehmen ist.

Gemäß Fig. 2 und 3 ist das Rohr 8 mit den Auslaßstutzen 5 in einer vertikalen Ebene verschwenkbar, so daß sich die Auslaßstutzen 5 den bei Beaufschlagung mit Gas aufschwimmenden elastischen Schläuchen 2 so anpassen kann, daß die Längsachsen der Auslaßstutzen 5 mit den Längsachsen der angeschlossenen elastischen Schläuche 2 im Anschlußbereich zusammenfallen.

Wie den Fig. 2 und 3 weiter zu entnehmen ist, verjüngen sich die Auslaßstutzen 5, ausgehend von dem Grund-Hohlkörper 4 bzw. dem Rohr 8 in Richtung ihrer Mündungen 9, so daß sich, wie insbesondere in Fig. 3 dargestellt, die elastischen Schläuche 2 unter Vermeidung von extremen Knickungen und Spannungszuständen bei Betriebsruhe der Begasungs-Vorrichtung an die Außenwand und der Anschlußstutzen 5 anlegen kann. Dadurch wird eine das Material der elastischen Schläuche 2 schädigende Belastung derselben in diesem Bereich auch dann vermieden, wenn die Anlage nicht in Betrieb ist.

In dem Verjüngungsbereich 10 der Anschlußstutzen 5 sind in der Wandung Löcher 11 vorgesehen, die dazu dienen, den gemäß Fig. 3 im Ruhezustand in diesem Verjüngungsbereich 10 anliegenden Schlauch bei Einleitung von Gas von diesem Bereich abzuheben und den Zustand gemäß Fig. 2 herzustellen.

Gemäß einer in den Zeichnungen nicht dargestellten Ausführungsform weist der Grund-Hohlkörper 4 respektive der Boden-Verteiler 3 an seinen Enden 12 jeweils Vorrichtung 13 auf, an welche weitere Grund-Hohlkörper 4 bzw. Boden-Verteiler 3 angeschlossen werden können, so daß in Abhängigkeit der Größe eines zu bestückenden Klärbeckens die einzubauende Begasungs-Vorrichtung modulweise aus Boden-Verteilern und Schläuchen zusammengestellt werden kann.

Ebenfalls nicht dargestellt in den Zeichnungen sind Rückschlagventile, die entweder einzeln in den jeweiligen Auslaßstutzen 5 vorgesehen sein können, andererseits auch im Grund-Hohlkörper 4 selbst, so daß bei beschädigten Leitungen o. ä. ein Wassereinbruch in den Bodenverteiler vermieden wird.

## Patentansprüche

1. Boden-Verteiler für die Beaufschlagung elastischer Schläuche mit Gas, umfassend im wesentlichen einen Grund-Hohlkörper (4) frei wählbarer Länge mit mindestens einem Anschlußstutzen (6) für die Einleitung von Gas und mit mindestens einem Auslaßstutzen (5) zum Anschluß eines mit Gas zu beaufschlagenden elastischen Schlauches (2), dadurch gekennzeichnet, daß der Auslaßstutzen (5) in einer vertikalen Ebene verschwenkbar ist.

2. Bodenverteiler nach Anspruch 1, dadurch gekennzeichnet, daß der Grund-Hohlkörper (4) selbst mit dem daran vorgesehenen Auslaßstutzen (5) um eine zur Vertikalen senkrechte Längsachse schwenkbar ausgebildet ist.

3. Boden-Verteiler nach Anspruch 1 oder Anspruch 2, dadurch gekennzeichnet, daß der Auslaßstutzen (5) sich, ausgehend von dem Grund-Hohlkörper (4), in Richtung seiner Mündung (9) in den angeschlossenen elastischen Schlauch (2) hinein verjüngt.

4. Boden-Verteiler nach Anspruch 3, dadurch gekennzeichnet, daß der Auslaßstutzen (5) in der Wandung seines Verjüngungsbereiches (10) Löcher (11) aufweist.

5. Boden-Verteiler nach Anspruch 1 bzw. Anspruch 2, dadurch gekennzeichnet, daß der Grund-Hohlkörper (4) als Rohr (8) bestimmter Länge und bestimmten Durchmessers ausgebildet ist, an welchem mehrere Auslaßstutzen (5) in einem Abstand voneinander angeordnet sind, und daß das Rohr (8) an seinen Enden (12 bzw. 12') jeweils Vorrichtungen aufweist, an welche weitere Grund-Hohlkörper (4) anschließbar sind.

6. Boden-Verteiler nach einem der vorstehenden Ansprüche, dadurch gekennzeichnet, daß in den Auslaßstutzen (5) und/oder im Grund-Hohlkörper (4) Rückschlagventile vorgesehen sind.

## Claims

1. Bottom distributor for introducing gas into elastic tubes substantially including a hollow base body (4) of freely selectable length with at least one connecting socket (6) for introducing gas and at least one outlet socket (5) for the connection of an elastic tube (2) into which gas is to be introduced, characterised in that the outlet socket (5) is pivotable in a vertical plane.

2. Bottom distributor as claimed in claim 1, characterised in that the hollow base body (4) itself together with the outlet socket (5) provided thereon is constructed to be pivotable about a longitudinal axis perpendicular to the vertical.

3. Bottom distributor as claimed in claim 1 or 2, characterised in that the outlet socket (5) tapers in the direction of its mouth (9), starting from the hollow base body (4), into the connected elastic tube (2).

4. Bottom distributor as claimed in claim 3, characterised in that the outlet socket (5) has holes (11) in the wall of its tapered region (10).

5. Bottom distributor as claimed in claim 1 or 2, characterised in that the hollow base body (4) is constructed in the form of a tube (8) of predetermined length and predetermined diameter, arranged on which is a plurality of outlet sockets (5) spaced from one another and that the tube (8) has respective devices at its ends (12 and 12'), to which further hollow base bodies (4) may be connected.

6. Bottom distributor as claimed in one of the preceding claims, characterised in that non-return valves are provided in the outlet socket (5) and/or in the hollow base body (4).

## Revendications

1. Distributeur de fond destiné à alimenter en gaz des tuyaux élastiques, comprenant essentiellement un corps creux de base (4) de longueur à choisir librement avec au moins une tubulure de raccordement (6) pour l'introduction du gaz et avec au moins une tubulure de sortie (5) pour le raccordement d'un tuyau élastique (2) à alimenter en gaz, caractérisé en ce que la tubulure de sortie (5) peut pivoter dans un plan vertical.

2. Distributeur de fond selon la revendication 1, caractérisé en ce que le corps creux de base (4) est lui-même réalisé de manière à pouvoir pivoter, par la tubulure de sortie (5) prévue sur celui-ci, autour d'un axe longitudinal perpendiculaire à la verticale.

3. Distributeur de fond selon la revendication 1 ou la revendication 2, caractérisé en ce que la tubulure de sortie (5), partant du corps creux de base (4), se rétrécit dans la direction de son embouchure (9), à l'intérieur du tuyau élastique (2) raccordé.

4. Distributeur de fond selon la revendication 3, caractérisé en ce que la tubulure de sortie (5) présente des trous (11) dans la paroi de sa zone rétrécie (10).

5. Distributeur de fond selon la revendication 1 ou la revendication 2, caractérisé en ce que le corps creux de base (4) est réalisé en tant que tube (8) de longueur déterminée et de diamètre déterminé, sur lequel sont disposées plusieurs tubulures de sortie (5) à distance les unes des autres et en ce que le tube (8) présente à chacune de ses extrémités (12 ou 12') des dispositifs auxquels peuvent être raccordés d'autres corps creux de base (4).

6. Distributeur de fond selon l'une des revendications précédentes, caractérisé en ce que des clapets de non-retour sont prévus dans les tubulures de sortie (5) et/ou dans le corps creux de base (4).
